# EUROPÄISCHE PATENTSCHRIFT

(11) **EP 2 559 132 B1**
(45) Veröffentlichungstag und Bekanntmachung des Hinweises auf die Patenterteilung: **10.08.2016**
(21) Anmeldenummer: 11704973.4
(22) Anmeldetag: 18.02.2011
(51) Int. Cl.: H02J 7/00, B60L 11/18, H02J 1/00

(54) **KOPPELEINHEIT UND BATTERIEMODUL MIT INTEGRIERTEM PULSWECHSELRICHTER UND ERHÖHTER ZUVERLÄSSIGKEIT**
COUPLING DEVICE AND BATTERY MODULE WITH INTEGRATED PULSE INVERTER AND INCREASED RELIABILITY
UNITÉ D'ACCOUPLEMENT ET MODULE DE BATTERIE AVEC ONDULEUR INTÉGRÉ ET FIABILITÉ AMÉLIORÉE

(30) Priorität: 16.04.2010 DE 102010027857
(43) Veröffentlichungstag der Anmeldung: 20.02.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/052395
(87) Internationale Veröffentlichungsnummer: WO 2011/128139

(56) Entgegenhaltungen:
- EP-A1- 2 056 422
- US-A1- 2009 091 295
- US-A1- 2009 267 566

## Beschreibung

Die vorliegende Erfindung betrifft eine Koppeleinheit für ein Batteriemodul und ein Batteriemodul mit einer solchen Koppeleinheit.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen. Dabei ist jedoch problematisch, dass es aufgrund nicht exakt identischer Zellkapazitäten und -spannungen zu Ausgleichsströmen zwischen den parallel geschalteten Batteriezellen kommen kann. Bekannte Verfahren zum Herstellen von Batteriezellen sind beispielsweise in DE 10 2008 041 319 A1 angegeben. Ferner sind in US 2009/0091295 A1, US 2009/0267566 A1, und EP 2 056 422 A1 bekannte Batteriesysteme beschrieben, die Einrichtung zum ausbalancierten Laden und/oder Entladen aufweisen.

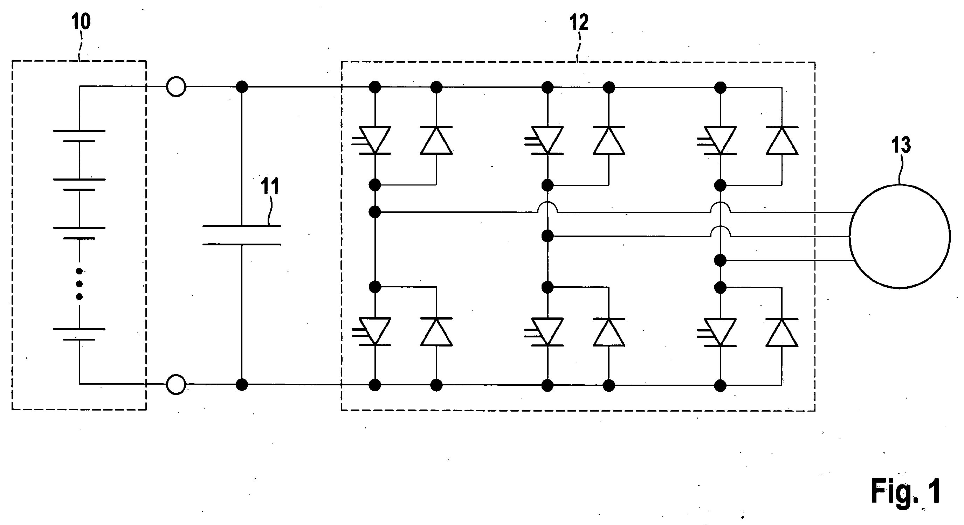

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 10 ist an einen Gleichspannungszwischenkreis angeschlossen, welcher durch einen Kondensator 11 gepuffert wird. An den Gleichspannungszwischenkreis angeschlossen ist ein Pulswechselrichter 12, der über jeweils zwei schaltbare Halbleiterventile und zwei Dioden an drei Ausgängen gegeneinander phasenversetzte Sinusspannungen für den Betrieb eines elektrischen Antriebsmotors 13 bereitstellt. Die Kapazität des Kondensators 11 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

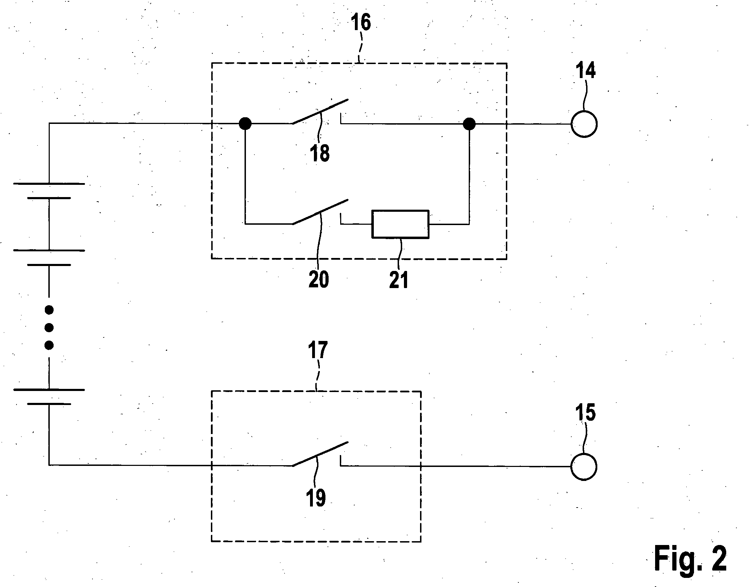

Fig. 2 zeigt die Batterie 10 der Fig. 1 in einem detaillierteren Blockschaltbild. Eine Vielzahl von Batteriezellen sind in Serie sowie optional zusätzlich parallelgeschaltet, um eine für eine jeweilige Anwendung gewünschte hohe Ausgangsspannung und Batteriekapazität zu erreichen. Zwischen den Pluspol der Batteriezellen und ein positives Batterieterminal 14 ist eine Lade- und Trenneinrichtung 16 geschaltet. Optional kann zusätzlich zwischen den Minuspol der Batteriezellen und ein negatives Batterieterminal 15 eine Trenneinrichtung 17 geschaltet werden. Die Trenn- und Ladeeinrichtung 16 und die Trenneinrichtung 17 umfassen jeweils ein Schütz 18 beziehungsweise 19, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 16 ist zusätzlich ein Ladeschütz 20 mit einem zu dem Ladeschütz 20 in Serie geschalteten Ladewiderstand 21 vorgesehen. Der Ladewiderstand 21 begrenzt einen Aufladestrom für den Kondensator 11, wenn die Batterie an den Gleichspannungszwischenkreis angeschlossen wird. Hierzu wird zunächst das Schütz 18 offen gelassen und nur der Ladeschütz 20 geschlossen. Erreicht die Spannung am positiven Batterieterminal 14 die Spannung der Batteriezellen, kann das Schütz 19 geschlossen und gegebenfalls das Ladeschütz 20 geöffnet werden. Die Schütze 18, 19 und das Ladeschütz 20 erhöhen die Kosten für eine Batterie 10 nicht unerheblich, da hohe Anforderungen an ihre Zuverlässigkeit und an die von ihnen zu führenden Ströme gestellt werden.

Die Serienschaltung einer hohen Zahl von Batteriezellen bringt neben der hohen Gesamtspannung das Problem mit sich, dass die gesamte Batterie ausfällt, wenn eine einzige Batteriezelle ausfällt, weil der Batteriestrom wegen der Serienschaltung in allen Batteriezellen fließen können muss. Ein solcher Ausfall der Batterie kann zu einem Ausfall des Gesamtsystems führen. Bei einem Elektrofahrzeug führt ein Ausfall der Antriebsbatterie zu einem so genannten Liegenbleiber, bei anderen Vorrichtungen wie z. B. der Rotorblattverstellung bei Windkraftanlagen bei starkem Wind kann es sogar zu sicherheitsgefährdenden Situationen kommen. Daher ist eine hohe Zuverlässigkeit der Batterie vorteilhaft. Gemäß Definition bedeutet der Begriff "Zuverlässigkeit" die Fähigkeit eines Systems, für eine vorgegebene Zeit korrekt zu arbeiten.

### Offenbarung der Erfindung

Erfindungsgemäß wird eine Batterie mit einer Mehrzahl von Batteriemodulen gemäß dem unabhängigen Anspruch 1 offenbart.

Jedes Batteriemodul weist eine Koppeleinheit auf, wobei die Koppeleinheit einen ersten Eingang, einen zweiten Eingang und einen Ausgang aufweist. Die Koppeleinheit ist ausgebildet, auf ein Steuersignal hin den ersten Eingang oder den zweiten Eingang mit dem Ausgang zu verbinden.

Die Koppeleinheit ermöglicht es, eine oder mehrere zwischen den ersten und den zweiten Eingang geschaltete Batteriezellen entweder so an den Ausgang der Koppeleinheit zu koppeln, dass die Spannung der Batteriezellen extern zur Verfügung steht, oder aber die Batteriezellen zu überbrücken, so dass eine Spannung von 0 V von außen sichtbar ist. Die Zuverlässigkeit eines Batteriesystems kann somit gegenüber dem in Figur 1 dargestellten massiv erhöht werden, weil der Ausfall einer einzelnen Batteriezelle nicht unmittelbar zum Ausfall des Batteriesystems führt.

Die Koppeleinheit kann einen Wechselschalter aufweisen, welcher ausgebildet ist, auf das Steuersignal hin entweder den ersten Eingang oder den zweiten Eingang mit dem Ausgang zu verbinden. Alternativ kann die Koppeleinheit einen ersten Schalter, welcher zwischen den ersten Eingang und den Ausgang geschaltet ist, und einen zweiten Schalter, welcher zwischen den zweiten Eingang und den Ausgang geschaltet ist, aufweisen. Eine solche Ausführung der Koppeleinheit eignet sich besonders gut für eine Realisierung mit Halbleiterschaltern, wobei der erste Schalter und/oder der zweite Schalter bevorzugt als MOSFET-Schalter oder Insulated Gate Bipolar Transistor (IGBT)-Schalter ausgebildet sind.

Ferner weist jedes der Batteriemodule wenigstens eine Batteriezelle, vorzugsweise einer Lithium-Ionen-Batteriezelle, auf, welche zwischen den ersten Eingang und den zweiten Eingang der Koppeleinheit geschaltet ist, wobei ein erstes Terminal des Batteriemoduls mit dem Ausgang der Koppeleinheit und ein zweites Terminal des Batteriemoduls mit dem zweiten Eingang der Koppeleinheit verbunden sind. Soll die Spannung der wenigstens einen Batteriezelle am ersten und zweiten Terminal des Batteriemoduls zur Verfügung stehen, wird der erste Eingang der Koppeleinheit auf deren Ausgang durchgeschaltet. Soll hingegen das Batteriemodul deaktiviert werden, wird der erste Eingang vom Ausgang der Koppeleinheit abgetrennt und der zweite Eingang mit dem Ausgang der Koppeleinheit verbunden. Dadurch werden das erste und das zweite Terminal leitend miteinander verbunden, so dass sich für das Batteriemodul eine Spannung von 0 V ergibt.

Gemäß einer bevorzugten Ausführungsform der Erfindung hat die Batterie einen oder mehrere, vorzugsweise genau drei, Batteriemodulstränge. Dabei umfasst ein Batteriemodulstrang eine Mehrzahl von in Serie geschalteten Batteriemodulen gemäß dem zweiten Erfindungsaspekt. Die Batterie weist dabei ferner eine Steuereinheit auf, welche ausgebildet ist, das Steuersignal für die Koppeleinheiten zu erzeugen und an die Koppeleinheiten auszugeben.

Die Batterie besitzt den Vorteil, dass auch bei Ausfall einer Batteriezelle das betroffene Batteriemodul deaktiviert werden kann, während die verbleibenden Batteriemodule weiterhin eine Spannung zur Verfügung stellen. Zwar sinkt so die von der Batterie maximal zur Verfügung stellbare Spannung, allerdings führt eine Senkung der Spannung in einer batteriebetriebenen Anordnung gewöhnlich nicht zu deren Gesamtausfall. Zudem ist es möglich, eine Anzahl von zusätzlichen Batteriemodulen vorzusehen, welche in die Serienschaltung der Batteriemodule entsprechend einbezogen werden, wenn eines der Batteriemodule ausfällt und deaktiviert werden muss. Dadurch wird die Spannung der Batterie nicht durch den Ausfall eines Batteriemoduls beeinträchtigt und die Funktionalität der den Ausfall eines Batteriemoduls beeinträchtigt und die Funktionalität der Batterie unabhängig von dem Ausfall einer Batteriezelle, wodurch wiederum die Zuverlässigkeit der Gesamtanordnung massiv erhöht wird.

Weisen die Koppeleinheiten, wie oben beschrieben, erste und zweite Schalter auf, kann die Steuereinheit ausgebildet sein, entweder den ersten Schalter einer ausgewählten Koppeleinheit zu schließen und den zweiten Schalter der ausgewählten Koppeleinheit zu öffnen, oder den ersten Schalter der ausgewählten Koppeleinheit zu öffnen und den zweiten Schalter der ausgewählten Koppeleinheit zu schließen, oder den ersten und den zweiten Schalter der ausgewählten Koppeleinheit zu öffnen. Werden sowohl der erste und der zweite Schalter geöffnet, wird das Batteriemodul hochohmig, wodurch der Stromfluss in dem Batteriemodulstrang unterbrochen wird. Dies kann im Wartungsfall nützlich sein, wo beispielsweise alle Batteriemodule eines Batteriemodulstranges in den hochohmigen Zustand versetzt werden können, um gefahrlos ein defektes Batteriemodul austauschen zu können. Dadurch werden die in Fig. 2 gezeigten Schütze 17 und 18 des Standes der Technik überflüssig, da bereits die Koppeleinheiten die Möglichkeit bieten, die Batterie an ihren beiden Polen spannungsfrei zu schalten.

Die Steuereinheit kann außerdem ausgebildet sein, zu einem ersten Zeitpunkt alle ersten Eingänge der Koppeleinheiten eines ausgewählten Batteriemodulstranges mit den Ausgängen der Koppeleinheiten des ausgewählten Batteriemodulstranges und zu einem zweiten Zeitpunkt alle zweiten Eingänge der Koppeleinheiten des ausgewählten Batteriemodulstranges mit den Ausgängen der Koppeleinheiten des ausgewählten Batteriemodulstranges zu verbinden. Dadurch wird zum ersten Zeitpunkt die volle Ausgangsspannung des ausgewählten Batteriemodulstranges am Ausgang des Batteriemodulstranges zur Verfügung gestellt, während zum zweiten Zeitpunkt eine Spannung von 0V ausgegeben wird. Dadurch werden die Koppeleinheiten des Batteriemodulstranges als Pulswechselrichter betrieben, welcher, wie in Fig. 1 gezeigt, entweder den positiven Pol oder den negativen Pol des Gleichspannungszwischenkreises auf die Ausgänge des Pulswechselrichters durchschaltet. Durch Einsatz beispielsweise einer pulsweitenmodulierten Ansteuerung kann so eine näherungsweise sinusförmige Ausgangsspannung erzeugt werden, wobei die Motorwicklungen des Antriebsmotors als Filter wirken.

Die Batterie der Erfindung kann somit die Funktion des Pulswechselrichters des Standes der Technik komplett übernehmen. Bei einer Ausführung mit mehreren Batteriemodulsträngen kann jeder Batteriemodulstrang eine gegenüber den anderen Batteriemodulsträngen phasenverschobene Ausgangsspannung erzeugen, so dass ein Antriebsmotor direkt mit der Batterie verbunden werden kann. Dabei ist zudem vorteilhaft, dass die Gesamtkapazität der Batterie auf mehrere Batteriemodulstränge verteilt wird, wodurch eine Parallelschaltung von Batteriezellen entfallen oder wenigstens in deutlich geringerem Ausmaß vorgenommen werden kann. Dadurch werden Ausgleichsströme zwischen parallelgeschalteten Batteriezellen eliminiert oder wenigstens reduziert, was die Lebensdauer der Batterie erhöht. Anstelle eines einzigen Gleichspannungszwischenkreises wie in Fig. 1 ergeben sich somit soviele Gleichspannungszwischenkreise, wie Batteriemodulstränge vorgesehen sind. Dies bietet den Vorteil, dass eventuell vorgesehene Pufferkondensatoren kleiner dimensioniert werden oder vollständig entfallen können.

Die Batterie kann eine mit der Steuereinheit verbundenen Sensoreinheit aufweisen, welche ausgebildet ist, eine defekte Batteriezelle zu detektieren und der Steuereinheit anzuzeigen. Die Steuereinheit ist dabei ausgebildet, ein Batteriemodul mit der defekten Batteriezelle durch Ausgeben eines geeigneten Steuersignals zu deaktivieren. Die Sensoreinheit kann beispielsweise eine Zellspannung der Batteriezellen oder andere Betriebsparameter der Batteriezellen messen, um auf den Zustand der Batteriezellen zu schließen. Hierbei kann eine "defekte Batteriezelle" nicht nur eine tatsächlich defekte Batteriezelle, sondern auch eine Batteriezelle sein, deren aktueller Zustand eine hohe Wahrscheinlichkeit anzeigt, dass in näherer Zukunft mit einem tatsächlichen Defekt der Batteriezelle zu rechnen ist.

Ein vierter Erfindungsaspekt betrifft ein Kraftfahrzeug mit einem elektrischen Antriebsmotor zum Antreiben des Kraftfahrzeuges und einer mit dem elektrischen Antriebsmotor verbundenen Batterie gemäß dem vorhergehenden Erfindungsaspekt.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine Koppeleinheit gemäß der Erfindung,
Figur 4 eine erste Ausführungsform der Koppeleinheit,
Figur 5 eine zweite Ausführungsform der Koppeleinheit,
Figur 6A und 6B zwei Ausführungsformen des erfindungsgemäßen Batteriemoduls,
Figur 7 eine erste Ausführungsform der erfindungsgemäßen Batterie, und
Figur 8 ein Antriebssystem mit einer weiteren Ausführungsform der erfindungsgemäßen Batterie.

### Ausführungsformen der Erfindung

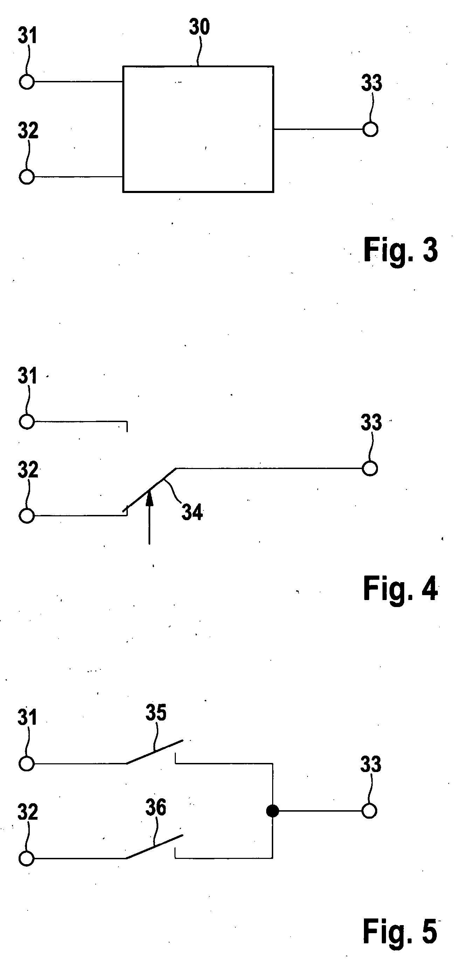

Figur 3 zeigt eine Koppeleinheit 30 gemäß der Erfindung. Die Koppeleinheit 30 besitzt zwei Eingänge 31 und 32 sowie einen Ausgang 33 und ausgebildet, einen der Eingänge 31 oder 32 mit dem Ausgang 33 zu verbinden und den anderen abzukoppeln. Bei bestimmten Ausführungsformen der Koppeleinheit kann diese außerdem ausgebildet sein, beide Eingänge 31, 32 vom Ausgang 33 abzutrennen. Nicht vorgesehen ist jedoch, sowohl den Eingang 31 als auch den Eingang 32 mit dem Ausgang 33 zu verbinden.

Figur 4 zeigt eine erste Ausführungsform der Koppeleinheit 30, welche über einen Wechselschalter 34 verfügt, welcher prinzipiell nur einen der beiden Eingänge 31, 32 mit dem Ausgang 33 verbinden kann, während der jeweils andere Eingang 31, 32 vom Ausgang 33 abgekoppelt wird. Der Wechselschalter 34 kann besonders einfach als elektromechanischer Schalter realisiert werden.

Figur 5 zeigt eine zweite Ausführungsform der Koppeleinheit 30, bei der ein erster und ein zweiter Schalter 35 beziehungsweise 36 vorgesehen sind. Jeder der Schalter ist zwischen einen der Eingänge 31 beziehungsweise 32 und den Ausgang 33 geschaltet. Im Gegensatz zu der Ausführungsform von Figur 4 bietet diese Ausführungsform den Vorteil, dass auch beide Eingänge 31, 32 vom Ausgang 33 abgekoppelt werden können, so dass der Ausgang 33 hochohmig wird. Zudem können die Schalter 35, 36 einfach als Halbleiterschalter wie z.B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf eine Steuersignal beziehungsweise eine Änderung des Steuersignales reagieren kann und hohe Umschaltraten erreichbar sind.

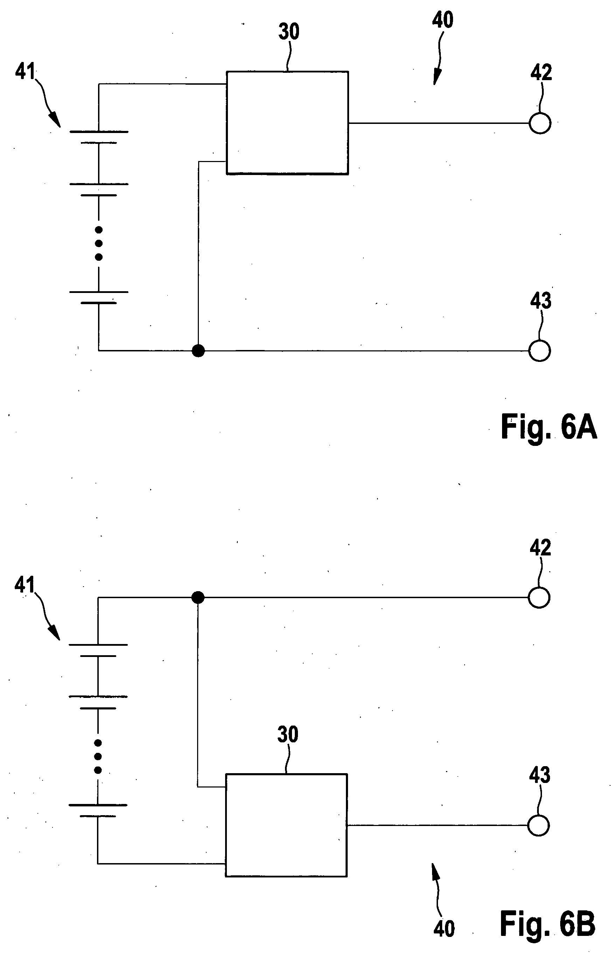

Die Figuren 6A und 6B zeigen zwei Ausführungsformen des erfindungsgemäßen Batteriemoduls 40. Eine Mehrzahl von Batteriezellen 41 sind zwischen die Eingänge einer Koppeleinheit 30 in Serie geschaltet. Die Erfindung ist jedoch nicht auf eine solche Serienschaltung von Batteriezellen beschränkt, es kann auch nur eine einzelne Batteriezelle vorgesehen sein oder aber eine Parallelschaltung oder gemischt-seriell-parallele Schaltung von Batteriezellen. Im Beispiel der Figur 6A sind der Ausgang der Koppeleinheit 30 mit einem ersten Terminal 42 und der negative Pol der Batteriezellen mit einem zweiten Terminal 43 verbunden. Es ist jedoch eine spiegelbildliche Anordnung wie in Figur 6B möglich, bei der der positive Pol der Batteriezellen mit dem ersten Terminal 42 und der Ausgang der Koppeleinheit 30 mit dem zweiten Terminal 43 verbunden sind.

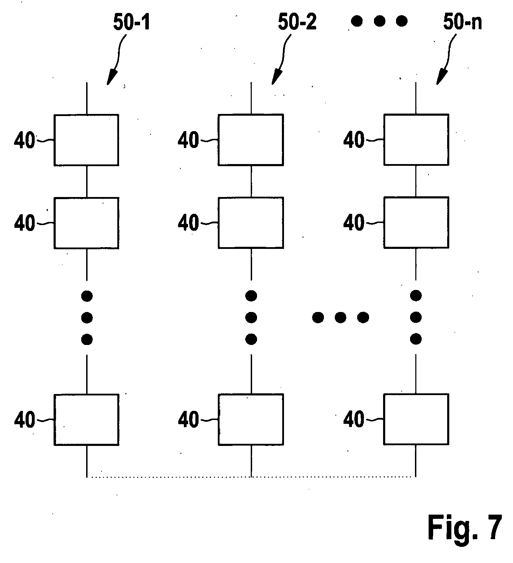

Figur 7 zeigt eine erste Ausführungsform der erfindungsgemäßen Batterie, welche über n Batteriemodulstränge 50-1 bis 50-n verfügt. Jeder Batteriemodulstrang 50-1 bis 50-n weist eine Mehrzahl von Batteriemodulen 40 auf, wobei vorzugsweise jeder Batteriemodulstrang 50-1 bis 50-n dieselbe Anzahl von Batteriemodulen 40 und jedes Batteriemodul 40 dieselbe Anzahl von Batteriezellen in identischer Weise verschaltet enthält. Ein Pol eines jeden Batteriemodulstranges kann mit einem entsprechenden Pol der anderen Batteriemodulstränge verbunden sein, was durch eine gestrichelte Linie in Figur 7 angedeutet ist. Generell kann ein Batteriemodulstrang jede Zahl von Batteriemoduien größer 1 und eine Batterie jede Zahl von Batteriemodulsträngen enthalten. Auch können an den Polen der Batteriemodulstränge zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen von den Batterieanschlüssen durch die in den Batteriemodulen 40 enthaltenen Koppeleinheiten 30 erfolgen kann.

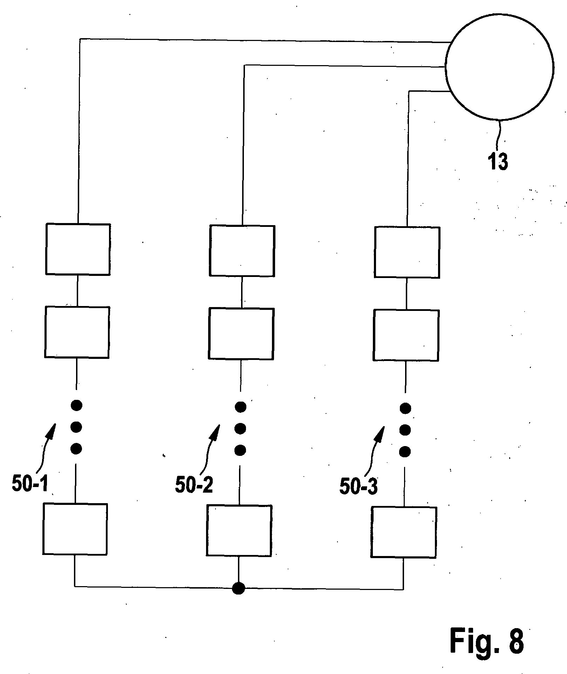

Figur 8 zeigt ein Antriebssystem mit einer weiteren Ausführungsform der erfindungsgemäßen Batterie. Im gezeigten Beispiel besitzt die Batterie drei Batteriemodulstränge 50-1, 50-2 und 50-3, welche jeweils direkt an einen Eingang eines Antriebsmotors 13 angeschlossen sind. Da die meisten verfügbaren Elektromotoren auf einen Betrieb mit drei Phasensignalen ausgelegt sind, besitzt die Batterie der Erfindung bevorzugt genau drei Batteriemodulstränge. Die Batterie der Erfindung besitzt den weiteren Vorzug, dass die Funktionalität eines Pulswechselrichters bereits in die Batterie integriert ist. Indem eine Steuereinheit der Batterie entweder alle Batteriemodule 40 eines Batteriemodulstranges aktiviert oder deaktiviert, stehen am Ausgang des Batteriemodulstranges entweder 0V oder die volle Ausgangsspannung des Batteriemodulstranges zur Verfügung. Durch geeignete Ansteuerung wie bei einem Pulswechselrichter, beispielsweise durch Pulsweitenmodulation, können so geeignete Phasensignale für den Antrieb des Antriebsmotors 13 bereitgestellt werden.

Die Erfindung besitzt außer den bereits genannten Vorteilen außerdem die Vorteile einer Reduktion der Anzahl von Hochvoltkomponenten, von Steckverbindungen und bietet die Möglichkeit, ein Kühlsystem der Batterie mit dem des Pulswechselrichters zu kombinieren, wobei ein Kühlmittel, das zur Kühlung der Batteriezellen eingesetzt wird, anschließend zur Kühlung der Komponenten des Pulswechselrichters (also der Koppeleinheiten 30) eingesetzt werden kann, da diese üblicherweise höhere Betriebstemperaturen erreichen und durch das von den Batteriezellen bereits erwärmte Kühlmittel noch hinreichend gekühlt werden können. Zudem wird es möglich, die Steuereinheiten der Batterie und des Pulswechselrichters zu kombinieren und so weiter Aufwand einzusparen. Die Koppeleinheiten bieten ein integriertes Sicherheitskonzept für Pulswechselrichter und Batterie und erhöhen die Zuverlässigkeit des Gesamtsystems sowie die Lebensdauer der Batterie.

Ein weiterer Vorteil der Batterie mit integriertem Pulswechselrichter ist, dass sie sehr einfach modular aus einzelnen Batteriemodulen mit integrierter Koppeleinheit aufgebaut werden kann. Dadurch wird die Verwendung von Gleichteilen (Baukastenprinzip) möglich.

## Patentansprüche

1. Eine Batterie mit einer Mehrzahl von in Serie geschalteten Batteriemodulen (40), wobei jedes Batteriemodul (40) ein erstes Terminal (42, 43) und ein zweites Terminal (42, 43) eine Koppeleinheit (30) und wenigstens eine zwischen einen ersten Eingang (31) und einen zweiten Eingang (32) der Koppeleinheit (30) geschaltete Batteriezelle (41), vorzugsweise eine Lithium-Ionen-Batteriezelle, umfasst, wobei die Koppeleinheit (30) ausgebildet ist, auf ein Steuersignal hin den ersten Eingang (31) oder den zweiten Eingang (32) mit dem Ausgang (33) der Koppeleinheit (30) zu verbinden, **gekennzeichnet dadurch, dass** bei jedem der Batteriemodule (40) das erste Terminal (42, 43) des Batteriemoduls (40) mit dem Ausgang (33) der jeweiligen Koppeleinheit (30) und das zweite Terminal (42, 43), des Batteriemoduls (40) mit dem zweiten Eingang (32) der jeweiligen Koppeleinheit (30) verbunden sind.

2. Die Batterie gemäß Anspruch 1, wobei die Koppeleinheit (30) einen Wechselschalter (34) aufweist, welcher ausgebildet ist, auf das Steuersignal hin entweder den ersten Eingang (31) oder den zweiten Eingang (32) mit dem Ausgang (33) zu verbinden.

3. Die Batterie gemäß Anspruch 1, wobei die Koppeleinheit (30) einen ersten Schalter (35), welcher zwischen den ersten Eingang (31) und den Ausgang (33) geschaltet ist, und einen zweiten Schalter (36), welcher zwischen den zweiten Eingang (32) und den Ausgang (33) geschaltet ist, aufweist.

4. Die Batterie gemäß Anspruch 3, bei der der erste Schalter (35) und/oder der zweite Schalter (36) als Halbleiterschalter, vorzugsweise als MOSFET-Schalter oder Insulated Gate Bipolar Transistor (IGBT)-Schalter ausgebildet sind.

5. Die Batterie gemäß einem der vorhergehenden Ansprüche, wobei die Batteriemodule (40) in einem oder mehreren, vorzugsweise genau drei, Batteriemodulsträngen (50) angeordnet sind, und wobei die Batterie ferner eine Steuereinheit aufweist, welche ausgebildet ist, das Steuersignal für die Koppeleinheiten (30) zu erzeugen und an die Koppeleinheiten (30) auszugeben.

6. Die Batterie gemäß Anspruch 5, bei der die Koppeleinheiten (30) gemäß einem der Ansprüche 4 oder 5 ausgebildet sind und bei der die Steuereinheit ausgebildet ist, entweder den ersten Schalter (35) einer ausgewählten Koppeleinheit (30) zu schließen und den zweiten Schalter (36) der ausgewählten Koppeleinheit (30) zu öffnen, oder den ersten Schalter (35) der ausgewählten Koppeleinheit (30) zu öffnen und den zweiten Schalter (36) der ausgewählten Koppeleinheit (30) zu schließen, oder den ersten und den zweiten Schalter (35, 36) der ausgewählten Koppeleinheit (30) zu öffnen.

7. Die Batterie gemäß einem der Ansprüche 5 oder 6, bei der die Steuereinheit außerdem ausgebildet ist, zu einem ersten Zeitpunkt alle ersten Eingänge (31) der Koppeleinheiten (30) eines ausgewählten Batteriemodulstranges (50) mit den Ausgängen (33) der Koppeleinheiten (30) des ausgewählten Batteriemodulstranges (50) und zu einem zweiten Zeitpunkt alle zweiten Eingänge (32) der Koppeleinheiten (30) des ausgewählten Batteriemodulstranges (50) mit den Ausgängen (33) der Koppeleinheiten (30) des ausgewählten Batteriemodulstranges (50) zu verbinden.

8. Die Batterie gemäß einem der Ansprüche 5 bis 7, mit einer mit der Steuereinheit verbundenen Sensoreinheit, welche ausgebildet ist, eine defekte Batteriezelle (41) zu detektieren und der Steuereinheit anzuzeigen, wobei die Steuereinheit ausgebildet ist, ein Batteriemodul (40) mit der defekten Batteriezelle (41) durch Ausgeben eines geeigneten Steuersignals zu deaktivieren.

9. Ein Kraftfahrzeug mit einem elektrischen Antriebsmotor (13) zum Antreiben des Kraftfahrzeuges und einer mit dem elektrischen Antriebsmotor (13) verbundenen Batterie gemäß einem der Ansprüche 6 bis 9.

## Claims

1. Battery having a plurality of battery modules (40) connected in series, each battery module (40) comprising a first terminal (42, 43) and a second terminal (42, 43), a coupling unit (30) and at least one battery cell (41), preferably a lithium ion battery cell, connected between a first input (31) and a second input (32) of the coupling unit (30), the coupling unit (30) being designed to connect the first input (31) or the second input (32) to the output (33) of the coupling unit (30) in response to a control signal, **characterized in that**, in each of the battery modules (40), the first terminal (42, 43) of the battery module (40) is connected to the output (33) of the respective coupling unit (30) and the second terminal (42, 43) of the battery module (40) is connected to the second input (32) of the respective coupling unit (30).

2. Battery according to Claim 1, the coupling unit (30) having a changeover switch (34) which is designed to connect either the first input (31) or the second input (32) to the output (33) in response to the control signal.

3. Battery according to Claim 1, the coupling unit (30) having a first switch (35), which is connected between the first input (31) and the output (33), and a second switch (36), which is connected between the second input (32) and the output (33).

4. Battery according to Claim 3, in which the first switch (35) and/or the second switch (36) is/are in the form of a semiconductor switch, preferably in the form of a MOSFET switch or an insulated gate bipolar transistor (IGBT) switch.

5. Battery according to one of the preceding claims, the battery modules (40) being arranged in one or more, preferably precisely three, battery module strings (50), and the battery also having a control unit which is designed to generate the control signal for the coupling units (30) and to output it to the coupling units (30).

6. Battery according to Claim 5, in which the coupling units (30) are designed according to either of Claims 4 and 5 and in which the control unit is designed either to close the first switch (35) of a selected coupling unit (30) and to open the second switch (36) of the selected coupling unit (30) or to open the first switch (35) of the selected coupling unit (30) and to close the second switch (36) of the selected coupling unit (30) or to open the first and second switches (35, 36) of the selected coupling unit (30).

7. Battery according to either of Claims 5 and 6, in which the control unit is also designed to connect all first inputs (31) of the coupling units (30) of a selected battery module string (50) to the outputs (33) of the coupling units (30) of the selected battery module string (50) at a first time and to connect all second inputs (32) of the coupling units (30) of the selected battery module string (50) to the outputs (33) of the coupling units (30) of the selected battery module string (50) at a second time.

8. Battery according to one of Claims 5 to 7, having a sensor unit which is connected to the control unit and is designed to detect a defective battery cell (41) and to indicate it to the control unit, the control unit being designed to deactivate a battery module (40) having the defective battery cell (41) by outputting a suitable control signal.

9. Motor vehicle having an electric drive motor (13) for driving the motor vehicle and a battery according to one of Claims 6 to 9 which is connected to the electric drive motor (13).

## Revendications

1. Batterie comprenant une pluralité de modules de batterie (40) branchés en série, chaque module de batterie (40) comprenant une première borne (42, 43) et une deuxième borne (42, 43), une unité de couplage (30) et au moins une cellule de batterie (41), de préférence une cellule de batterie lithium-ion, branchée entre une première entrée (31) et une deuxième entrée (32) de l'unité de couplage (30), l'unité de couplage (30) étant configurée pour relier, en présence d'un signal de commande, la première entrée (31) ou la deuxième entrée (32) à la sortie (33) de l'unité de couplage (30), **caractérisée en ce que** sur chacun des modules de batterie (40), la première borne (42, 43) du module de batterie (40) est reliée à la sortie (33) de l'unité de couplage (30) correspondante et la deuxième borne (42, 43) du module de batterie (40) est reliée à la deuxième entrée (32) de l'unité de couplage (30) correspondante.

2. Batterie selon la revendication 1, l'unité de couplage (30) possédant un commutateur inverseur (34) qui est configuré pour, en présence du signal de commande, relier la première entrée (31) ou la deuxième entrée (32) à la sortie (33).

3. Batterie selon la revendication 1, l'unité de couplage (30) possédant un premier commutateur (35), lequel est branché entre la première entrée (31) et la sortie (33), et un deuxième commutateur (36), lequel est branché entre la deuxième entrée (32) et la sortie (33).

4. Batterie selon la revendication 3, le premier commutateur (35) et/ou le deuxième commutateur (36) étant réalisés sous la forme de commutateurs semiconducteurs, de préférence sous la forme de commutateurs MOSFET ou de commutateurs IGBT (Insulated Gate Bipolar Transistor - Transistor bipolaire à gâchette isolée).

5. Batterie selon l'une des revendications précédentes, les modules de batterie (40) étant disposés dans une ou plusieurs, de préférence exactement trois branches de module de batterie (50), la batterie possédant en outre une unité de commande qui est configurée pour générer le signal de commande pour les unités de couplage (30) et le délivrer aux unités de couplage (30).

6. Batterie selon la revendication 5, avec laquelle les unités de couplage (30) sont configurées selon l'une des revendications 4 ou 5, et avec laquelle l'unité de commande est configurée soit pour fermer le premier commutateur (35) d'une unité de couplage (30) sélectionnée et ouvrir le deuxième commutateur (36) de l'unité de couplage (30) sélectionnée, soit pour ouvrir le premier commutateur (35) de l'unité de couplage (30) sélectionnée et fermer le deuxième commutateur (36) de l'unité de couplage (30) sélectionnée, soit pour ouvrir les premier et deuxième commutateurs (35, 36) de l'unité de couplage (30) sélectionnée.

7. Batterie selon l'une des revendications 5 ou 6, avec laquelle l'unité de commande est en outre configurée pour, à un premier instant, relier toutes les premières entrées (31) des unités de couplage (30) d'une branche de module de batterie (50) sélectionnée aux sorties (33) des unités de couplage (30) de la branche de module de batterie (50) sélectionnée et, à un deuxième instant, relier toutes les deuxièmes entrées (32) des unités de couplage (30) de la branche de module de batterie (50) sélectionnée aux sorties (33) des unités de couplage (30) de la branche de module de batterie (50) sélectionnée.

8. Batterie selon l'une des revendications 5 à 7, comprenant une unité de détection reliée à l'unité de commande, laquelle est configurée pour détecter une cellule de batterie (41) défectueuse et l'indiquer à l'unité de commande, l'unité de commande étant configurée pour désactiver un module de batterie (40) avec la cellule de batterie (41) défectueuse en délivrant un signal de commande approprié.

9. Véhicule automobile équipé d'un moteur de propulsion électrique (13) destiné à propulser le véhicule automobile et d'une batterie selon l'une des revendications 6 à 9 reliée au moteur de propulsion électrique (13).
